(19) Europäisches Patentamt
European Patent Office
Office européen des brevets

(11) **EP 4 601 362 A1**

(12) **EUROPEAN PATENT APPLICATION**
published in accordance with Art. 153(4) EPC

(43) Date of publication:
**13.08.2025  Bulletin 2025/33**

(51) International Patent Classification (IPC):
*H04W 48/16* (2009.01)      *H04B 7/0413* (2017.01)
*H04W 16/28* (2009.01)      *H04W 88/12* (2009.01)

(21) Application number: 23874487.4

(22) Date of filing: **06.07.2023**

(52) Cooperative Patent Classification (CPC):
**H04W 72/04; H04B 7/0413; H04L 27/26;**
**H04W 16/28; H04W 48/16; H04W 72/20;**
**H04W 88/12**

(86) International application number:
**PCT/JP2023/025068**

(87) International publication number:
**WO 2024/075353 (11.04.2024 Gazette 2024/15)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **03.10.2022  JP 2022159226**

(71) Applicant: **KDDI Corporation**
**Tokyo 163-8003 (JP)**

(72) Inventor: **IKAMI, Akio**
**Fujimino-shi, Saitama 356-8502 (JP)**

(74) Representative: **Mathys & Squire**
**The Shard**
**32 London Bridge Street**
**London SE1 9SG (GB)**

(54) **CONTROL DEVICE, METHOD, AND PROGRAM**

(57)    A control apparatus executes: first processing of receiving, from each one of a plurality of signal processing apparatuses, information of a received power of a reference signal which is transmitted via uplink and/or downlink between a user equipment and an access point; second processing of receiving, from each one of the plurality of signal processing apparatuses, information of a resource element allocated to a reference signal from a user equipment that the signal processing apparatus serves; and third processing of selecting, for each user equipment, an access point that serves the user equipment on a basis of the information of a received power received in the first processing and the information of a resource element received in the second processing.

FIG. 4

**Description**

TECHNICAL FIELD

The present invention relates to a control apparatus that determines an access point cluster for each user equipment in an open radio access network, a method, and a program.

BACKGROUND ART

In a known cellular system, radio signal interference between cells may cause the communication quality to be degraded at the cell edge. Regarding this, in Beyond 5G (5G, fifth generation mobile communication systems), CF-mMIMO (Cell-free massive MIMO) is being focused on as a communication scheme that can resolve interference between cells and can make the user throughput uniform. By collectively processing signals transmitted and received by dispersed APs (Access points) at a CPU (Central processing unit), the APs can cooperate so that optimization of the radio signals for which spatial multiplexing is performed for each user equipment is possible.

To reduce the signal processing amount at the CPU, an AP clustering technology has been proposed that selects an AP group (AP cluster) for transmitting and receiving data for each user (NPL 1). By cooperative processing being executed only for the transmitting and receiving of signals of the AP cluster for each user, the signal processing amount at the CPU can be reduced.

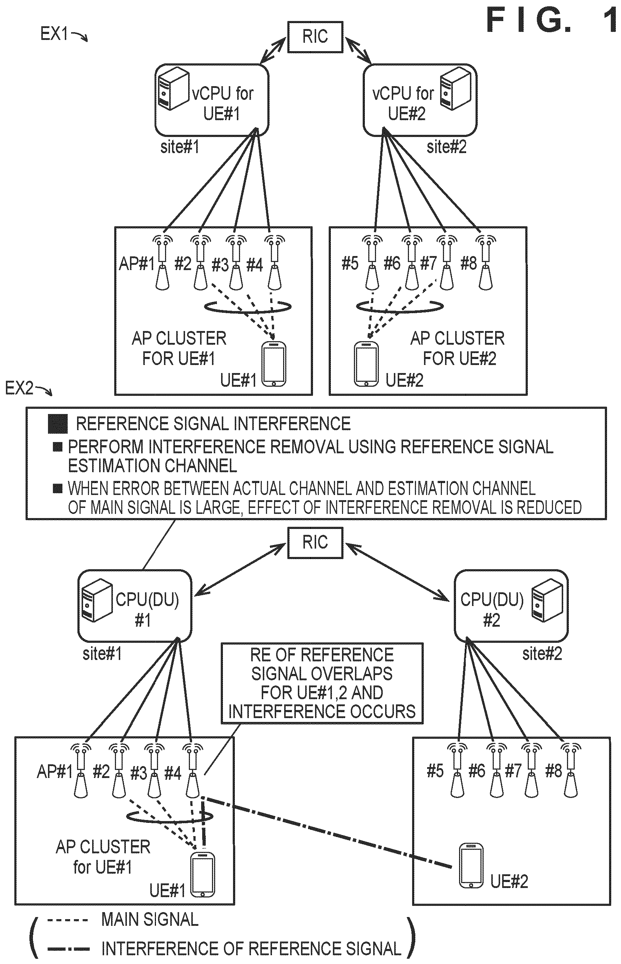

FIG. 1 is a diagram that schematically illustrates the AP clustering technology of a known method. As illustrated in the example EX1, regarding UE (user equipment) #1 and #2, AP #2 to AP #4 are selected as the AP group for UE #1 and the signals are collectively processed at the CPU of site #1, and AP #5 to AP #7 are selected as the AP group for UE #2 and the signals are collectively processed at the CPU of site #2.

Regarding determining a specific AP cluster, in order to select an appropriate AP cluster according to the movement of the user, the AP cluster can be controlled using RIC (RAN Intelligent Controller) specified in O-RAN (open radio access network) (NPL 2). Also, as an AP cluster selection method when using CF-mMIMO, a method of selecting an AP on the basis of an SS-RSRP (SS (synchronization signal)-reference signal received power), which is a known IF (interface) has been proposed (NPL 1), wherein the AP with the highest RSRP is set as the master AP, and the AP with an RSRP within a threshold from the RSRP of the master AP are set as the AP cluster of the UE.

Regarding this, the SS-RSRP may be set as a quality measurement value using a synchronization signal (NPL 3), and the received power per AP (RU) can be obtained by a DU (distributed unit corresponding to a CPU).

CITATION LIST

PATENT LITERATURE

NPL 1: E. Björnson and L. Sanguinetti, "Scalable Cell-Free Massive MIMO Systems", in IEEE Transactions on Communications, vol. 68, no. 7, pp. 4247-4261, July 2020.
NPL 2: O-RAN WG1, "Use Cases Detailed Specification", v06.00.02
NPL 3: 3GPP TS28.552, "5G performance measurements", v16.1.0
NPL 4: 3GPP TS38.211, "Physical channels and modulation"

SUMMARY OF INVENTION

TECHNICAL PROBLEM

With known AP clustering technology, interference between reference signals may occur.

In other words, with CF-mMIMO, processing is executed to remove interference from signals transmitted and received by the AP cluster using an estimation channel calculated from a reference signal. As a reference signal, a DMRS (Demodulation Reference Signal) for uplink post coding or an SRS (Sounding Reference Signal) for downlink precoding is used.

REs (Resource Elements) used in DMRS/SRS are allocated to each UE that a DU (distributed unit, corresponding to a CPU) connects to in a 3GPP standard (NPL 4). An RE region that can be used in DMRS/SRS is defined in the 3GPP standard, and because of an upper limit, depending on the congestion status, reference signal interference between UEs using the same RE occurs, which may lead to degradation of the channel estimation accuracy. In a case where the channel estimation accuracy is low, the interference removal processing using MMSE (Minimum Mean Square Error) or the like may not function sufficiently, leading to a reduction in the wireless quality.

Example EX2 of FIG. 1 is an example in which reference signal interference has occurred with respect to the situation of example EX1. Even though interference removal has been performed at CPU #1, the reference signal REs between UE #1 and UE #2 overlap, causing interference at AP #4, for example.

SOLUTION TO PROBLEM

In light of the problems with the known technology described above, the present invention provides technology for enabling an AP cluster to be selected so as avoid interference between reference signals.

A control apparatus according to an aspect of the present invention is a control apparatus for a radio access network of an O-RAN (open radio access network) specification, the radio access network being provided with a user equipment, an access point that transmits and receives radio signals with a user equipment, a plurality of signal processing apparatuses that execute signal processing for an access point, and the control apparatus, the control apparatus executing: first processing of receiving, from each one of the plurality of signal processing apparatuses, information of a received power of a reference signal which is transmitted via uplink and/or downlink between a user equipment and an access point; second processing of receiving, from each one of the plurality of signal processing apparatuses, information of a resource element allocated to a reference signal from a user equipment that the signal processing apparatus serves; and third processing of selecting, for each user equipment, an access point that serves the user equipment on a basis of the information of a received power received in the first processing and the information of a resource element received in the second processing.

ADVANTAGEOUS EFFECTS OF INVENTION

According to the present invention, by using information of resource elements, an AP cluster can be selected so as to avoid interference between reference signals.

Other features and advantages of the present invention will be apparent from the following description taken in conjunction with the accompanying drawings. Note that the same reference numerals denote the same or like components throughout the accompanying drawings.

BRIEF DESCRIPTION OF DRAWINGS

The accompanying drawings, which are incorporated in and constitute a part of the specification, illustrate embodiments of the invention and, together with the description, serve to explain principles of the invention.

FIG. 1 is a diagram schematically illustrating a known method and related issues.
FIG. 2 is a block diagram illustrating an example of the configuration of a radio access network according to an embodiment.
FIG. 3 is a block diagram illustrating an example of the configuration of a communication control system according to an embodiment.
FIG. 4 is a diagram of a process according to the present embodiment relating to uplink.
FIG. 5 is a diagram of a process according to the present embodiment relating to downlink.

DESCRIPTION OF EMBODIMENTS

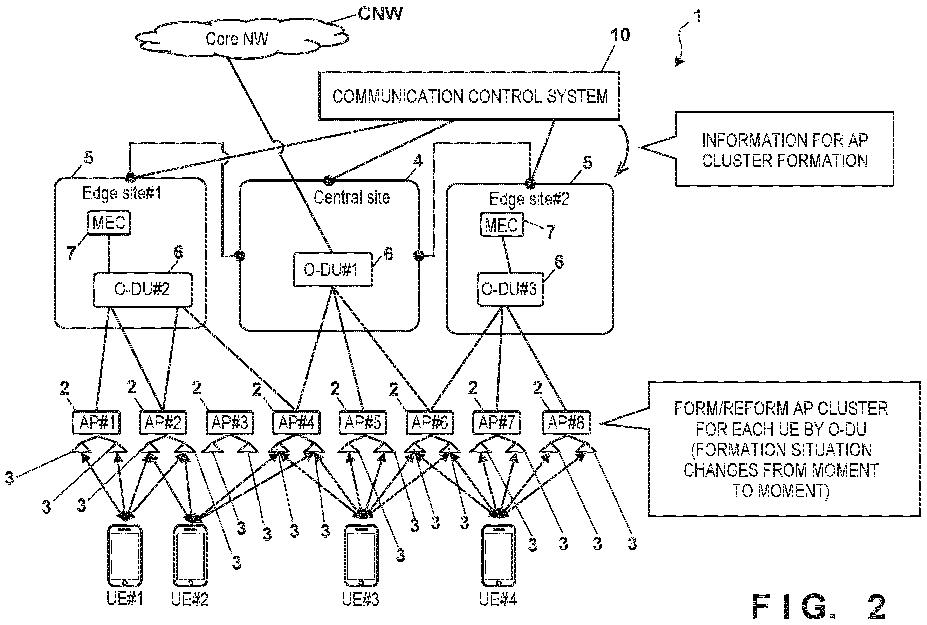

FIG. 2 is a block diagram illustrating an example of the configuration of a radio access network according to an embodiment. O-RAN specification is applied to a radio access network (RAN) 1 illustrated in FIG. 2.

In the RAN 1, a plurality of access points (AP) 2 (AP #1, AP #2, ...) are disposed in a dispersed arrangement. In the RAN 1, from among the plurality of dispersed APs 2, an AP cluster (access point group) for transmitting and receiving radio signals is formed for each user equipment (UE). In the example of FIG. 2, for example, for UE #1, an AP cluster is formed from two APs 2 (AP #1 and AP #2). For UE #2 and the other UEs, an AP cluster is formed in accordance with each UE.

Note that the example of FIG. 2 is an example of a specific AP cluster formed for a UE for a certain specific time (moment), and as the UE or the like moves with the progress of time, the AP cluster group formed by the RAN 1 according to the present embodiment also dynamically changes from moment to moment.

Each AP 2 of an AP cluster of a certain UE transmits and receives radio signals with the UE via its own antenna 3. For example, two APs 2 (AP #1 and AP #2) of the access point group for the UE #1 transmit and receive radio signals with the UE #1 via each antenna 3.

Each AP cluster is connected in a communication-enabling manner to an O-DU (distributed unit) 6 serving it. The O-DU 6 executes signal processing relating to the AP cluster that it serves. In the example of FIG. 2, for example, an O-DU #1 executes signal processing relating to an AP cluster (AP #4, AP #5, and AP #6) for the UE #3. In a similar manner, an O-DU #2 and others execute signal processing relating to AP clusters that they serve.

The signal processing relating to the access point group executed by the O-DU 6 is, for example, SU-MIMO (Single User MIMO), MU-MIMO (MultiUser MIMO), or similar signal processing.

The O-DU #1 is provided in a central site 4 and connected to a core network CNW. The O-DU #2 is provided in an edge site #1_5 (here, an underscore is used as a delimiter for differentiating between the identification number #1 and the reference number 5 and the same applies hereinafter) and connected to the core network CNW via the central site 4. A MEC (Multi-access Edge Computer) server 7 is provided in the edge site #1_5. The O-DU #3 is provided in an edge site #2_5. The MEC server 7 is provided in the edge site #2_5.

A communication control system 10 is connected in a communication-enabling manner to each site 4, 5. The communication control system 10 performs control for each O-DU 6. The communication control system 10 provides information for forming an AP cluster corresponding to the UE to the O-DU 6. The O-DU 6 forms an AP cluster corresponding to the UE that it serves, on the basis of the information provided from the communication control system 10.

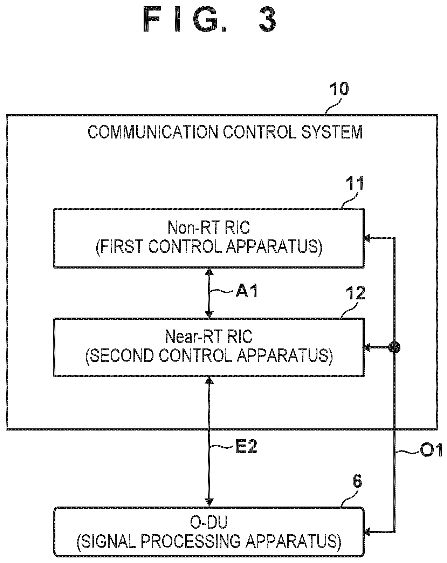

FIG. 3 is a block diagram illustrating an example of the configuration of the communication control system 10 according to an embodiment. The communication control system 10 includes a Non-RT RIC (non-real time RAN intelligent controller) 11 and a Near-RT RIC (near real time RAN intelligent controller) 12. The Non-RT RIC 11 is implemented using an SMO (Service and Management Orchestration) frame work.

The Non-RT RIC 11 and the Near-RT RIC 12 collects information such as KPI (key performance indicators), for example, from the O-DU 6 via an O1 interface. The O1 interface is specified by the O-RAN (NPL 2 described above) specification. The parameters that can be collected by the O1 interface correspond to the parameters specified in NPL 3 described above. Examples of the parameters include DL PRB usage, UL PRB usage, Average DL UE throughput, Average UL UE throughput, Number of PDU Sessions requested, and the like.

The Non-RT RIC 11 analyzes the information collected from the O-DU 6 and performs a settings change for the Near-RT RIC 12 on the basis of the analysis result. Here, the Non-RT RIC 11 provides the settings change information to the Near-RT RIC 12 via an A1 interface. The A1 interface is specified in the O-RAN specification.

The Near-RT RIC 12 analyzes the information collected from the O-DU 6 and performs a settings change for the O-DU 6 on the basis of the analysis result. Here, the Near-RT RIC 12 provides the settings change information to the O-DU 6 via an E2 interface. The E2 interface is specified in the O-RAN specification.

Note that as illustrated in FIG. 3, as the functional configuration, the Non-RT RIC 11 forms a first control apparatus, the Near-RT RIC 12 forms a second control apparatus, and the O-DU 6 forms a signal processing apparatus.

A cluster selection method for implementing interference removal according to the present embodiment will be described below. The present embodiment is as described as follows in terms of the overview, and includes adding information that is collected in a known framework.

In other words, the cluster selection of a known method according to NPL 1 and 3 has the following problem. Specifically, power information such as SS-RSRP is included in the information collected for cluster selection from the DU to the RIC. However, since allocation information for each UE of the DMRS/SRS resource which is the reference signal used in each uplink and downlink is not included, the information is not obtained at the RIC. (In other words, with a known method, at the E2/O1 interface, Performance Measurements information as specified in 3GPP 28.552 (NPL 3) can be collected. In 3GPP 28.552, as the MU-MIMO-related Performance Measurements, scheduling statistical information such as Scheduled PUSCH/PDSCH RBs per layer of MU-MIMO or the like and power information such as SS-RSRP and the like are specified. However, DMRS/SRS-related information is not specified.)

Accordingly, with a known method, the RIC cannot identify an AP with high interference due to the DMRS/SRS resources overlapping across UEs, and the RIC may select, as the AP cluster, an AP with a high SS-RSRP but a low channel estimation accuracy due to DMRS/SRS interference. As a result, at the AP with a low channel estimation accuracy and a large error between the actual channel and the estimation channel, interference isolation by the MIMO may not sufficiently function and high wireless quality may be unable to be ensured.

In light of the problem described above, in the present embodiment, resource allocation information of the two reference signals described below for each of uplink and downlink is added to the data collection IF (E2/O1 interface of the O-RAN) from the DU to the RIC, and control is performed to form an AP cluster on the basis of this information. Note that the AP cluster formed as a result can be assumed to mainly be the same for both uplink and downlink. However, the AP cluster formed for uplink and downlink may be different.

(1) Regarding uplink, DMRS resource allocation information

(2) Regarding downlink, SRS resource allocation information

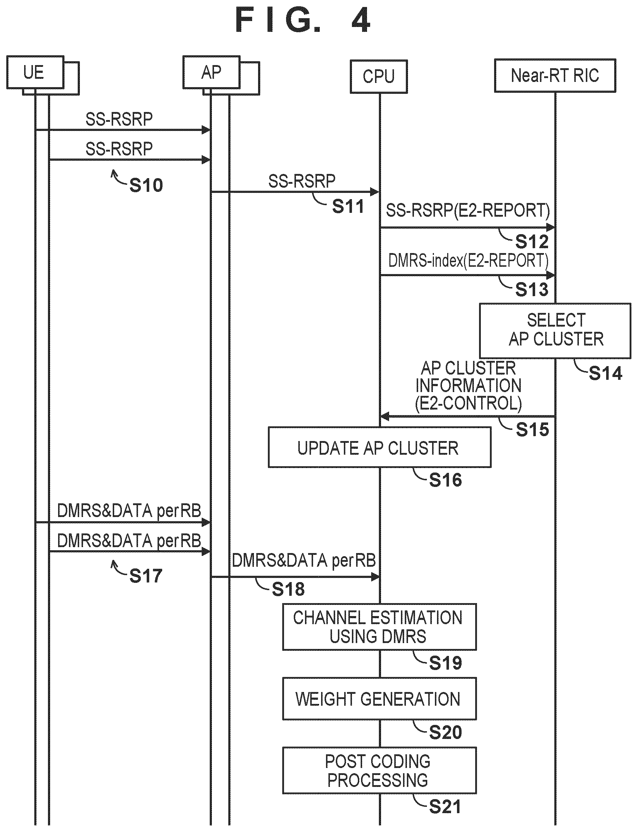

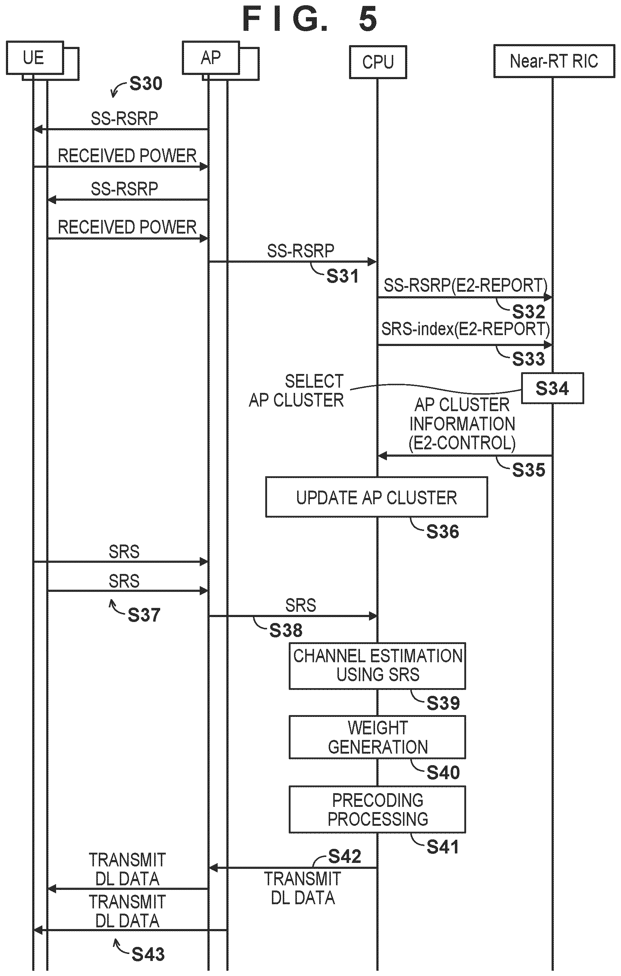

FIG. 4 is a diagram of a process according to the present embodiment relating to the (1) uplink described above. FIG. 5 is a diagram of a process according to the present embodiment relating to the (2) downlink described above. Note that in FIG. 4 and FIG. 5, UE, AP, CPU, Near-RT RIC appear as operation agents. These correspond to the UEs #1, #2, and so on, the APs 2, any one of the O-DUs 6, and the Near-RT RIC 12 illustrated in FIGS. 2 and 3 described above, but since the distinction between these is clear, reference signs will not be attached, and these will be abbreviated to UE, AP, CPU, and Near-RT RIC as illustrated in FIGS. 4 and 5.

Also, hereinafter, Near-RT RIC will be abbreviated to RIC.

Note that before the process of FIGS. 4 and 5 is started, an AP cluster may be formed in advance and the AP cluster may be re-formed via the process of FIGS. 4 and 5. A method for forming an AP cluster in advance may include performing (a) and (b) described below according to the method of PTL 1 described above.

(a) Transmitting, from the RIC to the CPU, access point group information (information of the AP cluster for each UE) indicating the configuration of the AP group for transmitting and receiving radio signals for each UE from among the plurality of dispersed APs.

(b) The CPU receiving the access point group information transmitted from the RIC, executing signal processing (channel estimation involving interference removal and the like) relating to the access points on the basis of the received access point group information, and forming an AP cluster for each UE.

Alternatively, reforming the AP cluster with the method according to the present embodiment may be continuously performed.

Each step of an embodiment relating to the uplink of FIG. 4 will be described below.

In step S10, each UE transmits a reference signal for SS-RSRP measurement to the corresponding AP (UE of the AP cluster already determined for the UE), and the received power of the SS-RSPR is measured at the AP. In step S11, each AP transmits the information of the SS-RSPR measured for each UE to the CPU.

In step S12, the CPU transmits the SS-RSPR information (information of the SS-RSRP of all APs and all UEs handled by the CPU) to the RIC via the E2 interface.

In step S13, as additional collection information according to the present embodiment as described above in summary, the CPU transmits DMRS resource allocation information to the RIC via the E2 interface. In other words, for all UEs handled and managed by the CPU, the allocation information of the resources (frequency band in an RB (resource block)) of a DMRS reference signal is transmitted to the RIC. (Note that for a cluster already formed before the start of the flow of FIG. 4, the CPU has already obtained the DMRS reference signal resource allocation information. Thus, this information can be transmitted to the RIC for reformation.)

In step S14, the CPU selects an AP cluster to be formed for each UE using each piece of information received in steps S12 and S13. In step S15, the information of the selected AP cluster is transmitted to the CPU via the E2 interface by the CPU. In step S16, the AP cluster in the CPU is updated by the AP cluster selected and transmitted, and an instruction is transmitted to each AP and each UE so as to cause the updated AP cluster to be formed.

The cluster selection in step S14 may be performed using the SS-RSPR information received in step S12. For example, as in the known method of NPL 1 described above, the AP with the highest RSRP may be set as the master AP, and the APs within a threshold from the RSRP of the master AP may be set as the AP cluster of the UE.

In the present embodiment, further, in the cluster selection based on the SS-RSPR information as described above, by applying a restriction using the DMRS resource allocation information received in step S13, an AP that may cause interference can be made to not be selected. Specifically, by performing the processing 1 and 2 described below, an AP that may cause interference can be excluded.

(Processing 1)

To obtain the interference state of the reference signal, the SIR (signal-to-interference ratio) of each UE-AP group between the UEs allocated with the same resources is calculated as follows.

$$\text{Reference signal SIR} = S/I$$

Here, S is a value received in step S12 as the RSRP between UE_k (k is an identifier of the UE, and k = 1, 2, ..., and so on) and AP_i (i is an identifier of the AP, and i = 1, 2, ..., and so on) and, I is a total value of the RSRP from all of the UE_k' using the same resource (a DMRS signal at the same frequency band corresponds to the same resource, regardless of the target AP) as UE_k, where UEs other than UE_k are UE_k' (k' ≠ k).

(Processing 2)

A cluster selection restriction is applied so that AP_i with an SIR, calculated as described above, that is equal to or less than the threshold is not included in the AP cluster of UE_k. (If the SIR is greater than the threshold, this restriction is not applied.)

In step S14, as described above, an AP cluster is re-formed avoiding any APs with a low channel estimation accuracy, and in step S16, the AP cluster is updated to the re-formed AP cluster. This can prevent a decrease in the channel estimation accuracy in the steps following step S17 and the wireless quality can be improved.

In step S17, on the basis of the re-formed AP cluster, a signal storing DMRS and data per RB is transmitted to the corresponding AP from each UE; in step S18, each AP transmits the result of demodulation of the DMRS signal and data to the CPU; in step S19, channel estimation is performed using this result; in step S20, weights of the channel estimation result (a channel matrix of estimated characteristics of transmission paths from the transmitting side UE to the receiving side AP) is generated; in step S21, post coding processing is executed; and then the flow of FIG. 4 ends.

Each step of an embodiment relating to the downlink of FIG. 5 will be described below.

In step S30, each AP transmits a reference signal for SS-RSRP measurement to the corresponding UE (UE belonging to the AP cluster already determined for the AP), and the received power of the SS-RSPR at the UE is measured and the measurement results are sent back to the AP. In step S31, each AP transmits the information of the SS-RSRP measured for each UE to the CPU.

In step S32, the CPU transmits the SS-RSPR information (information of the SS-RSPR of all APs and all UEs served by the CPU) to the RIC via the E2 interface.

In step S33, as additional collection information according to the present embodiment as described above in summary, the CPU transmits SRS resource allocation information to the RIC via the E2 interface. In other words, for all UEs served and managed by the CPU, the allocation information of the resources (frequency band in an RB (resource block) of a SRS reference signal is transmitted to the RIC. (Note that for a cluster already formed before the start of the flow of FIG. 5, the CPU has already obtained the DMRS reference signal resource allocation information. Thus, this information can be transmitted to the RIC for re-formation.)

In step S34, the CPU selects an AP cluster to be formed for each UE using each piece of information received in steps S32 and S33. In step S35, the information of the selected AP cluster is transmitted to the CPU via the E2 interface by the CPU. In step S36, the AP cluster in the CPU is updated by the AP cluster selected and transmitted, and an instruction is transmitted to each AP and each UE so as to cause the updated AP cluster to be formed.

The cluster selection of step S34 may be performed using the SS-RSPR information received in step S32. For example, as in the known method of NPL 1 described above, the AP with the highest RSRP may be set as the master AP and the APs within a threshold from the RSRP of the master AP may be set as the AP cluster of the UE.

In the present embodiment, further, in the cluster selection based on the SS-RSPR information as described above, by applying a restriction using the SRS resource allocation information received in step S33, an AP that may cause interference can be made to not be selected. Specifically, in a similar manner to step S14 of FIG. 4, in which the DMRS information is used as information for uplink in step S14, SRS information is used, in step S34, as information for downlink to calculate the reference signal SIR = S/I and determine the threshold through the processing 1 and 2.

In step S34, as described above, an AP cluster is re-formed avoiding any APs with a low channel estimation accuracy and in step S36, the AP cluster is updated to the re-formed AP cluster. This can prevent a decrease in the channel estimation accuracy in the steps following step S37 and the wireless quality can be improved.

In step S37, on the basis of the re-formed AP cluster, an SRS signal is transmitted to the corresponding AP from each UE; in step S38, each AP transmits the received power of the SRS signal to the CPU; in step S39, the CPU performs channel estimation using this result; in step S40, weights of the channel estimation result (a channel matrix of estimated characteristics of transmission paths from the transmitting side UE to the receiving side AP) is generated; in step S41, the CPU executes precoding processing; in step S42, the CPU transmits the DL data (the weights obtained through the precoding processing) to the AP; in step S43, the AP further transmits the received DL data to the UE; and then the flow of FIG. 5 ends.

According to the embodiment described above, an AP cluster can be selected while avoiding interference between reference signals. Various supplementary examples, alternative examples, additional examples, and the like will be described below.

<Providing the Hardware Configuration and Present Embodiment as a Program>

The communication control system 10 includes computer hardware such as a CPU, a memory, and the like, and each function of the communication control system 10 is implemented by the CPU executing a computer program stored in the memory. Note that the communication control system 10 may be configured using a general-purpose computer apparatus or may be configured as a dedicated hardware apparatus. For example, the communication control system 10 may be configured using a server computer connected to a communication network. Also, each function of the communication control system 10 may be implemented by cloud computing. Also, communication control system 10 may be implemented by an individual computer or may be implemented by the functions of the communication control system 10 being dispersed amongst a plurality of computers.

According to the communication control system 10 of the present embodiment, a contribution can be made to the infrastructure development of information communication technology. This contributes to Goal 9 of the sustainable development goals (SDGs) initiated by the United Nations of "building resilient infrastructure, promoting sustainable industrialization, and fostering innovation".

The present application claims priority from Japanese Patent Application No. 2022-159226 filed on October 3, 2022, which is hereby incorporated by reference herein.

**Claims**

1.   A control apparatus for a radio access network of an O-RAN (open radio access network) specification, the radio access network being provided with a user equipment, an access point that transmits and receives radio signals with a user equipment, a plurality of signal processing apparatuses that execute signal processing for an access point, and the control apparatus, the control apparatus executing:

  first processing of receiving, from each one of the plurality of signal processing apparatuses, information of a received power of a reference signal which is transmitted via uplink and/or downlink between a user equipment and an access point;
  second processing of receiving, from each one of the plurality of signal processing apparatuses, information of a resource element allocated to a reference signal from a user equipment that the signal processing apparatus serves; and

third processing of selecting, for each user equipment, an access point that serves the user equipment on a basis of the information of a received power received in the first processing and the information of a resource element received in the second processing.

2. The control apparatus according to claim 1, wherein the control apparatus is implemented using a NearRT RIC (Near-Real Time RAN Intelligent Controller), each one of the plurality of signal processing apparatuses is implemented using an O-DU (O-RAN Distributed Unit), and the receiving in the second processing is performed using an interface between the NearRT RIC and the O-DU.

3. The control apparatus according to claim 1, wherein in the third processing, the selecting is performed so that a received power is increased and so that an overlap of resource elements of the plurality of signal processing apparatuses is avoided.

4. The control apparatus according to claim 1, wherein in the third processing, for one or more second user equipment with the same resource element as a resource element between a first user equipment and a first access point, a received power between the first user equipment and the first access point is divided by a sum of a received power corresponding to the same resource element for the one or more second user equipment to obtain a signal-to-interference ratio, and a first access point determined to have a small signal-to-interference ratio is excluded from access points selected for a first user.

5. A method executed by a control apparatus for a radio access network of an O-RAN (open radio access network) specification, the radio access network being provided with a user equipment, an access point that transmits and receives radio signals with a user equipment, a plurality of signal processing apparatuses that execute signal processing for an access point, and the control apparatus, the method comprising:

first process of receiving, from each one of the plurality of signal processing apparatuses, information of a received power of a reference signal which is transmitted via uplink and/or downlink between a user equipment and an access point;

second process of receiving, from each one of the plurality of signal processing apparatuses, information of a resource element allocated to a reference signal from a user equipment that the signal processing apparatus serves; and

third process of selecting, for each user equipment, an access point that serves the user equipment on a basis of the information of received power received in the first process and the information of a resource element received in the second process.

6. A program that causes a computer to function as a control apparatus for a radio access network of an O-RAN (open radio access network) specification, the radio access network provided with a user equipment, an access point that transmits and receives radio signals with a user equipment, a plurality of signal processing apparatuses that execute signal processing for an access point, and a control apparatus, the program causing the computer to execute:

first processing of receiving, from each one of the plurality of signal processing apparatuses, information of a received power of a reference signal which is transmitted via uplink and/or downlink between a user equipment and an access point;

second processing of receiving, from each one of the plurality of signal processing apparatuses, information of a resource element allocated to a reference signal from a user equipment that the signal processing apparatus serves; and

third processing of selecting, for each user equipment, an access point that serves the user equipment on a basis of the information of received power received in the first processing and the information of a resource element received in the second processing.

EX1

RIC

F I G. 1

vCPU for
UE#1

vCPU for
UE#2

site#1

site#2

AP#1 #2 #3 #4

#5 #6 #7 #8

AP CLUSTER
FOR UE#1

AP CLUSTER
FOR UE#2

UE#1

UE#2

EX2

◼ REFERENCE SIGNAL INTERFERENCE

◼ PERFORM INTERFERENCE REMOVAL USING REFERENCE SIGNAL
ESTIMATION CHANNEL

◼ WHEN ERROR BETWEEN ACTUAL CHANNEL AND ESTIMATION CHANNEL
OF MAIN SIGNAL IS LARGE, EFFECT OF INTERFERENCE REMOVAL IS REDUCED

RIC

CPU(DU)
#1

CPU(DU)
#2

site#1

site#2

RE OF REFERENCE
SIGNAL OVERLAPS
FOR UE#1,2 AND
INTERFERENCE OCCURS

AP#1 #2 #3 #4

#5 #6 #7 #8

AP CLUSTER
for UE#1

UE#1

UE#2

( ----- MAIN SIGNAL

—··— INTERFERENCE OF REFERENCE SIGNAL )

**FIG. 2**

# F I G.   3

10

COMMUNICATION CONTROL SYSTEM

11

Non-RT RIC
(FIRST CONTROL APPARATUS)

A1

12

Near-RT RIC
(SECOND CONTROL APPARATUS)

E2

O1

6

O-DU
(SIGNAL PROCESSING APPARATUS)

# F I G. 4

# F I G. 5

| UE | AP | CPU | Near-RT RIC |

S30

UE ← AP : SS-RSRP

UE → AP : RECEIVED POWER

UE ← AP : SS-RSRP

UE → AP : RECEIVED POWER

AP → CPU : SS-RSRP
S31

CPU → Near-RT RIC : SS-RSRP(E2-REPORT)
S32

CPU → Near-RT RIC : SRS-index(E2-REPORT)
S33

SELECT AP CLUSTER
S34

AP CLUSTER INFORMATION (E2-CONTROL)
S35

UPDATE AP CLUSTER
S36

UE → AP : SRS

UE → AP : SRS
S37

AP → CPU : SRS
S38

CHANNEL ESTIMATION USING SRS
S39

WEIGHT GENERATION
S40

PRECODING PROCESSING
S41

S42

CPU → AP : TRANSMIT DL DATA

AP → UE : TRANSMIT DL DATA

AP → UE : TRANSMIT DL DATA
S43

## INTERNATIONAL SEARCH REPORT

| | International application No. |
|---|---|
| | **PCT/JP2023/025068** |

| A. | CLASSIFICATION OF SUBJECT MATTER |
|---|---|

*H04W 48/16*(2009.01)i; *H04B 7/0413*(2017.01)i; *H04W 16/28*(2009.01)i; *H04W 88/12*(2009.01)i
FI:  H04W48/16 130; H04W16/28 130; H04W88/12; H04B7/0413

According to International Patent Classification (IPC) or to both national classification and IPC

| B. | FIELDS SEARCHED |
|---|---|

Minimum documentation searched (classification system followed by classification symbols)

H04B7/02-7/12,7/24-7/26, H04L1/02-1/06, H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 相原 直紀 ほか, "Beyond 5Gに向けたユーザセントリックRANにおけるCF-mMIMOの分散CPU間の連携手法の特性評価", 電子情報通信学会技術研究報告, 09 December 2021, vol. 121, no. 302, pp. 69-74, ISSN 2432-6380 (AIHARA, Naoki et al. "Performance Analysis on distributed CPU Cooperation Schemes of CF-mMIMO on User-Centric RAN Towards Beyond 5G. IEICE Technical Report.)<br>entire text, all drawings | 1-6 |
| A | IKAMI, Akio et al., "Interference suppression for distributed CPU deployments in Cell-Free massive MIMO", 2022 IEEE 96th Vehicular Technology Conference (VTC2022-Fall), [online], 29 September 2022, Internet: <URL: https://ieeexplore.ieee.org/stamp/stamp.jsp?tp=&arnumber=10013063>, <DOI:10.1109/VTC2022-Fall57202.2022.10013063>, [retrieved on 16 August 2023]<br>entire text, all drawings | 1-6 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022159226 A

### Non-patent literature cited in the description

- **E. BJÖRNSON** ; **L. SANGUINETTI**. Scalable Cell-Free Massive MIMO Systems. *IEEE Transactions on Communications*, July 2020, vol. 68 (7), 4247-4261
- Use Cases Detailed Specification. *O-RAN WG1*
- 5G performance measurements. *3GPP TS28.552*
- Physical channels and modulation. *3GPP TS38.211*